# EUROPEAN PATENT SPECIFICATION

(11) **EP 2 935 982 B1**
(45) Date of publication and mention of the grant of the patent: **22.11.2017**
(21) Application number: 13820988.7
(22) Date of filing: 20.12.2013
(51) Int. Cl.: F21S 8/08, F21V 5/08, F21V 5/04, F21V 7/04, F21V 13/04, F21Y 115/00, F21W 131/105

(54) **LIGHT UNIT, APPARATUS AND LENS FOR LIGHTING**
LEUCHTEINHEIT, VORRICHTUNG UND LINSE ZUR BELEUCHTUNG
UNITÉ LUMINEUSE, APPAREIL ET LENTILLE POUR ÉCLAIRAGE

(30) Priority: 20.12.2012 IT BS20120184
(43) Date of publication of application: 28.10.2015
(73) Proprietor: Muteki S.r.l., 38068 Rovereto (TN) (IT)
(72) Inventor: BONAZZA, Alberto, 38068 Rovereto (TN) (IT)
(74) Representative: Pes, Matteo
(86) International application number: PCT/IB2013/061184
(87) International publication number: WO 2014/097237

(56) References cited:
- EP-A1- 2 315 068
- CN-U- 201 973 664
- KR-A- 20120 119 578
- US-A1- 2009 225 543
- US-A1- 2011 110 083
- US-A1- 2011 249 451
- US-A1- 2012 051 047
- US-A1- 2012 299 464

## Description

### Scope of the invention

The present invention relates to the field of lighting devices, mainly for outdoor, and in particular it relates to a light unit for a lighting apparatus used for example for lighting streets, tunnels, galleries, parking lots etc. The light unit according to the present invention can also be applied for lighting indoor spaces having large size.

In addition, the invention refers to a lighting apparatus which implements the light unit and to a lens for such a light unit.

### State of the art

As known, the designing of outdoor lighting devices, in particular for street lighting, is made with the aim of improving the safety of both vehicle and pedestrian traffic, in compliance with the technical rules and laws, ensuring the conditions of obstacle visibility on the roadbed and in potential hazard situations in case of intersections with other vehicles or pedestrian crossings.

The conventional technical solution in street lighting is the application of a plurality of supporting poles placed at the edge of the carriageway, provided with respective light units or projectors for the lighting, able to light a corresponding portion of the underlying street field.

Among different typologies of projectors, the most effective are those using LED lighting sources. Such sources in fact provide a more homogeneous lighting from both the light hue point-of-view and the color rendering point-of-view, as well as having an optimal lighting efficiency which ensures a reduction in power consumptions with respect to the conventional sources.

An example of street lighting device which adopts the LED technology is described in EP 2405181. The device comprises a plurality of LED sources adapted to light a corresponding area of the street field. More in particular, each source has its own spatial orientation which can be different from the orientation of the other sources. Thereby, the entire carriageway can be lighted transversally. In addition, each LED source is combined with a lens or light unit able to convey the produced light beam in a certain direction and with a predetermined divergence.

In the known art different geometries of the light unit are present in order to realize a predetermined light distribution.

For the purpose of outdoor lighting, and in particular of street lighting, indeed there is the need of obtaining a light beam having a predetermined longitudinal spread encompassing a carriageway region having the maximum allowed length without however impairing the lighting quality, preferably the performances in the transverse direction remaining the same.

In order to obtain such an object, light units having particular geometry have been developed. For example, US 2009/225543 describes a lens formed by two shell portions coupled together with respect to a symmetry axis. The assembly of the two shell portions forms a V-shaped depression. This way, the light radiation emitted by the LED source placed at the lens center, is refracted by the lens surface which widens the beam in a substantially longitudinal direction.

However, such a geometry has the drawback that the produced light beam does not have optimal divergence and lighting uniformity. This has to be ascribed to the presence of the lens causing a light dispersion outside the target of interest, that is to say towards outer areas, for example areas extending excessively beyond the carriageway.

The light beam which crossed the lens has areas having a lighting intensity more or less strong in certain points with respect to other points, according to an actually not optimal "spot" pattern.

Among other things, the light dispersion along the longitudinal direction of the light beam yields a smaller intensity towards edge areas of the light profile created by the single projector. Therefore, between two adjacent projectors along the carriageway, an area of partial shadow is found.

Document CN 201973664U discloses a lens provided with a diffuser recess, numbered as 3 in the figures. The recess is cylindrical, with the two ends substantially hemispherical.

Also KR 2012 0119578 discloses a lens provided with a diffuser recess. The lens has a longitudinal axis X-X and a transversal axis Y-Y. The shape of the recess is different along the two directions. In particular the recess is exactly semicircular (reference number 120x in the figures) when considered in cross section along a vertical plane containing axis X-X and has a tapered shape (reference number 120y in the figures) when considered in cross section along a vertical plane containing axis Y-Y.

US 2011/249451 discloses a lens having a recess that develops within the lens and is tapered toward a tip, but that has its base and cross-section always circular. EP 2315068 discloses a similar solution.

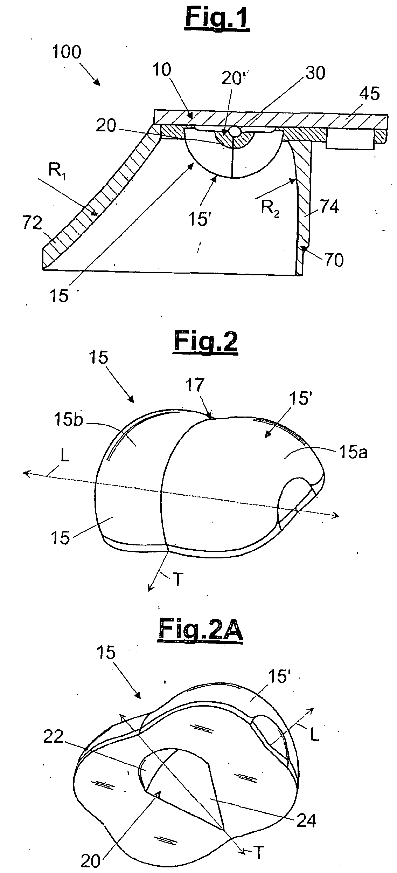

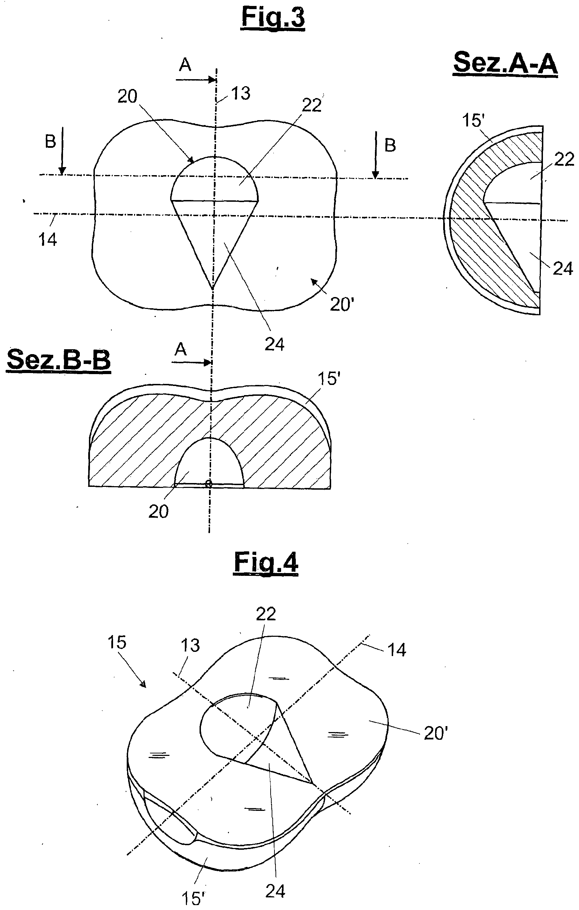

US 2012/051047 discloses a solution wherein the recess in the lens (reference number 14) has a substantially elliptical base (figures 1 and 4) and a semicircular profile when considered in cross-section on a vertical plane containing a second axis X orthogonal to axis Y (figure 2).

Other known solutions are disclosed in US 2012/299464 and US 2011/110083.

### Summary of the invention

It is therefore an object of the present invention to provide a light unit preferably for an outdoor lighting use, which allows obtaining an uniform light beam and having a good intensity in almost all the directions required for obtaining the lighting of the area of interest, and which at the same time minimizes the light dispersed outside the area of interest itself.

It is also an object of the present invention to provide a light unit preferably for an outdoor lighting use, which allows obtaining a minimization of power consumptions for the benefit of the lighting power which can be dedicated to the area to be lighted.

It is also an object of the present invention to provide a light unit which is easy and cheap to realize.

It is a further object of the present invention to provide a lighting apparatus comprising said light unit.

It is again an object of the present invention to provide a lens which can be applied to a light unit which achieves the same objects.

These and other objects are obtained by a light unit, according to claim 1, for a preferably outdoor lighting apparatus.

In particular, the light unit comprises a light source and a related lens. The lens comprises a first face facing towards a plane to be lighted and a second face, opposite to the first face and facing towards the light source. The first face is substantially rounded towards the plane to be lighted. At the second face of the lens an optical diffuser is obtained consisting in a recess having a substantially drop shape.

The above described lens geometry allows obtaining a light beam hitting on the plane to be lighted with a wide longitudinal and transverse spread. The so-obtained light beam has reduced light dispersions outside the area of interest and a good uniformity. This allows taking advantage optimally and effectively of the overall lighting power of the light source, for the benefit of the consumption minimization.

The first face of the lens develops according to a main longitudinal direction.

Preferably the second face of the lens is flat and the optical diffuser is obtained in correspondence thereof.

The optical diffuser develops substantially along the main longitudinal direction or alternatively along a main direction transverse or skew with respect to the latter.

The drop shape of the optical diffuser provides at least one substantially hemispherical portion from which a tapered portion extends, for example constituted by the half of a cone intended as sectioned along its own longitudinal axis. Additional alike shapes of diffuser can be encompassed in the definition of drop configuration, such as for example a mushroom shape or still a cone shape or other like shapes. Such a geometry, which combines the hemispherical portion and the cone portion, allows making the light beam asymmetrical by widening it, for example, in the developing direction of the cone itself.

In a preferred embodiment, the first rounded face of the lens substantially defines a cap. This is axially symmetric with respect to a transversal symmetry axis of the lens; preferably it is axisymmetric (axially symmetric) with respect to the transverse symmetry axis and to a lens longitudinal symmetry axis orthogonal to the transverse symmetry axis.

Preferably, the cap is positioned so that its own center, located by the intersection of the transverse and longitudinal symmetry axes, is aligned with the light source.

In a preferred embodiment the cap comprises a first and a second cap portions coupled together and forming a substantially V-shaped groove extending along the transverse symmetry axis of the lens. In other words, the first and the second cap portions create a V-shaped depression at the lens center geometrically defined by the intersection and merging of two almost hemispherical portions. The afore said cap configuration allows widening the light beam in the longitudinal direction, located by the longitudinal symmetry axis. The obtained angular width of the light beam is about 130°.

The light source is preferably a high intensity LED source, or LED clusters.

Preferably, the lens is a solid single-piece realized in clear material, more preferably in plastic material such as for example polycarbonate or PMMA, and the drop-shaped optical diffuser, as described, is hollow on the second face thereof by material removal; alternatively, the diffuser is provided in the lens already during the production step, for example during the molding step.

According to another aspect of the invention, a lighting apparatus comprises a plurality of light units prearranged on a supporting panel according to a predetermined layout. A preferred layout provides for a supporting panel having elongated shape, to form a supporting strip, wherein the plurality of light units is aligned and spaced one from each other according to a certain pitch.

Advantageously, according to the application, the lighting apparatus can be composed of a variable number of supporting strips each one provided with a number of light units comprised, for example, between one and eight or yet alternatively by a single board comprising a plurality of light units.

In a preferred embodiment, a light reflector is provided mounted on said supporting panel surrounding said light units. The light reflector, preferably made of ABS with a reflective material coating, contributes to render substantially rectangular the distribution of the light flux on the plane to be lighted by reducing the light rays outgoing from the area of interest.

In particular, the reflector comprises a first and a second wall developing parallel to the longitudinal axis. Preferably, the two walls have curved shape facing towards the lens, and in particular the first wall has a curvature radius greater than the curvature radius of the second wall. In particular, both walls have a convex curved shape. The convexity of each wall is facing towards the light units prearranged inside the light reflector.

According to a further aspect of the invention a lens which can be combined with a light unit for an outdoor lighting apparatus comprising a light source, whereby the lens comprises a first face facing towards a plane to be lighted and a second face facing towards the light source, wherein the first face is substantially rounded towards the plane to be lighted, and wherein at the second face of the lens an optical diffuser is obtained consisting in a recess having a substantially drop shape.

### Description of the Drawings

Further characteristics and advantages of the present invention will be more evident from a review of the following specification of a preferred, but not exclusive, embodiment, shown for illustration purposes only and without limitation, with the aid of the attached drawings, in which:
- figure 1 shows a sectional view of a light unit, according to the invention, for an outdoor lighting apparatus;
- figure 2 shows a perspective view of the light unit of figure 1;
- figure 2A shows a further perspective view of the light unit of figure 2;
- figure 3 shows a plan view of the light unit and respective sectional views of the latter identified with A-A and B-B, which highlight the shape of an optical diffuser;
- figure 4 shows a perspective view of the deflector of figure 3;
- figure 5 shows a perspective view of an outdoor lighting apparatus comprising the light unit, according to the invention;
- figure 6 shows a schematic view of the light beam produced by the lighting apparatus of figure 5;
- figure 7 shows a plot wherein an array of isolines is represented which identify the power distribution of the light beam produced by the light unit, according to the invention;
- figures 7A and 7B show respective plots which highlight a different distribution of the light beam.

### Detailed description of the invention

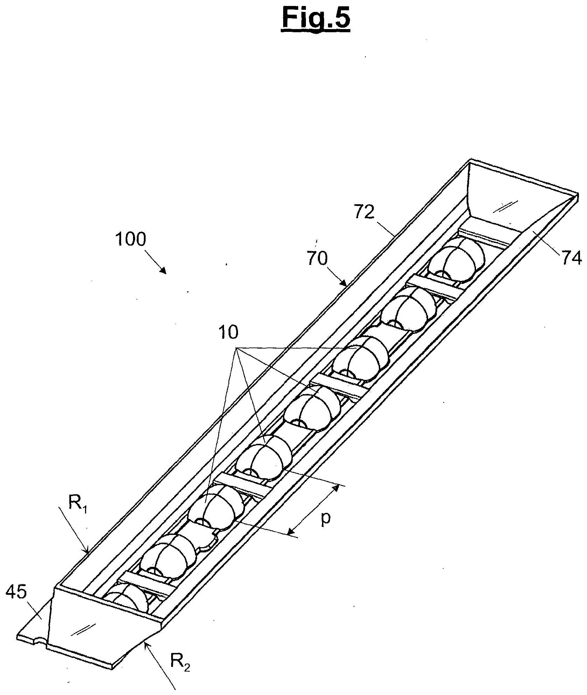

Referring to figure **1** a light unit **10** is represented for an outdoor lighting apparatus **100** (Fig. 5) used, for example, for lighting streets, galleries or parking lots, but also for lighting building facades.

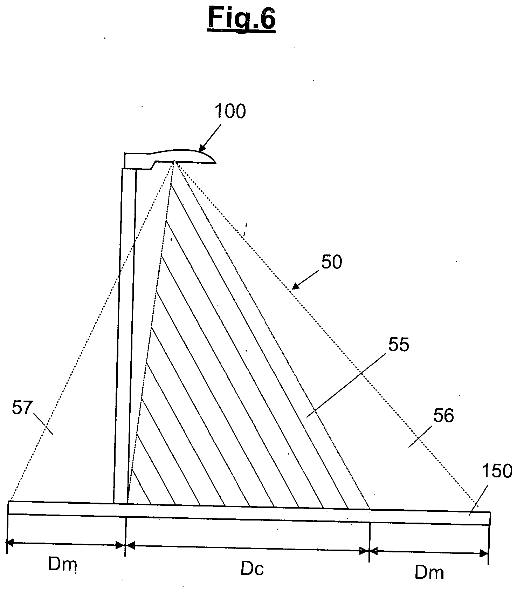

In particular, the light unit **10** comprises a light source **30** (shown schematically) combined with a lens **15** which produces a light beam **50** directed towards a plane to be lighted **150** (Fig. 6). The light source **30** is preferably a high intensity LED source.

More in particular, the lens **15** comprises a first face or an outer face **15'** facing towards the plane to be lighted **150** and a second face or an inner face **20'** facing towards the source **30.** The first face **15'** has a rounded shape to form substantially a cap **15'** surrounding at least partially the light source **30.**

The inner face **15'** of the lens **15,** as shown in figure 2, has conversely an optical diffuser **20** consisting in a drop-shaped recess. In particular, the lens **15** is a single-piece in clear material and the optical diffuser **20** is hollow on the inner face **20',** preferably flat, of the lens **15** and fills a predetermined central area. The concavity of the outer cap **15'** and the optical diffuser **20** are therefore concordant one to another. In other words, the lens **15** is a single piece with the rounded outer face **15'** and the flat inner face **20'** in which the optical diffuser **20** is obtained.

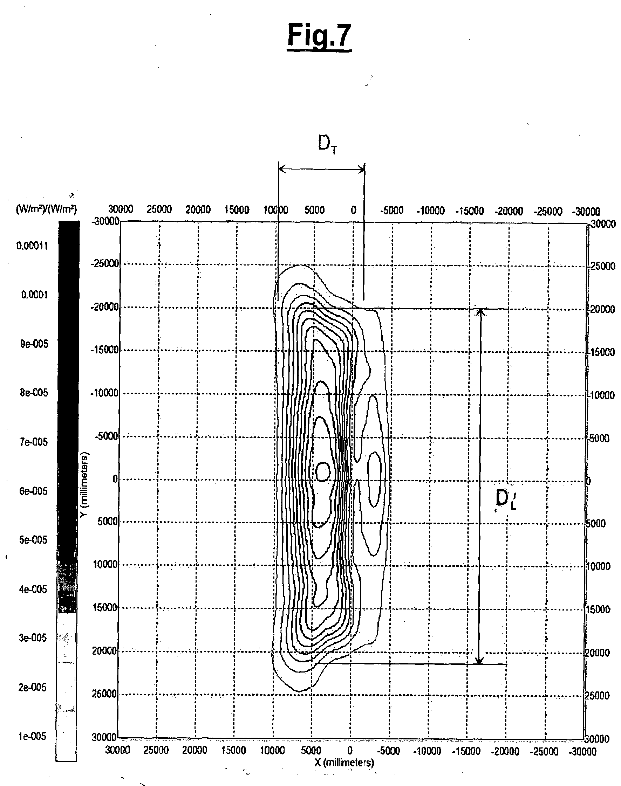

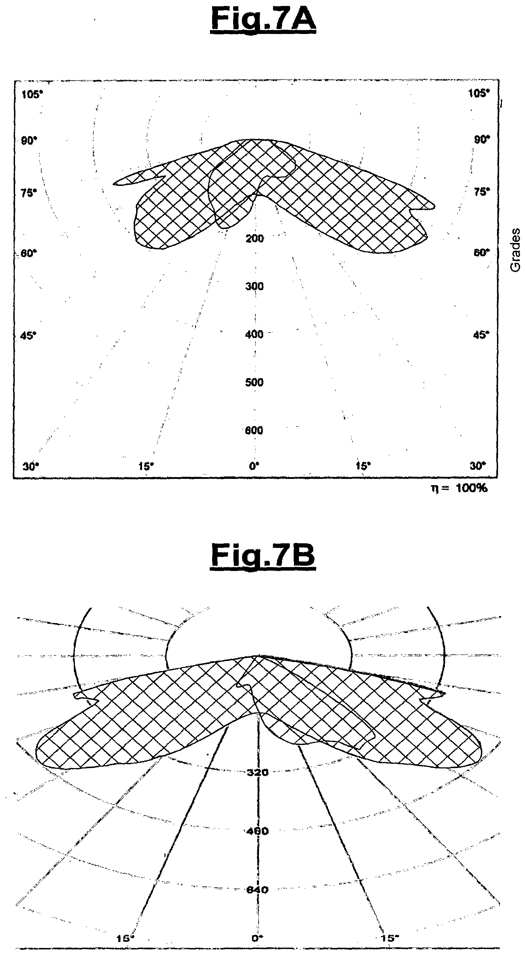

Such a geometry of the lens **15** allows obtaining a light beam **50** concentrated on the plane to be lighted without light dispersions outside the area of interest, as visible by the plots of figures 7A and 7B and as described in detail in the following.

More in particular, as shown in figures 2A and 2B, the outer cap **15'** of the lens **15** has elongated shape and develops substantially in a longitudinal direction **L.** Conversely, the optical diffuser **20** develops in a transverse direction **T** (Fig. 2A), substantially orthogonal or skew with respect to the longitudinal direction L. Alternatively and in a not shown way, the optical diffuser **20** can develop in the longitudinal direction **L.**

Geometrically, as better shown referring to figures 3 and 4 and respective sections **A**-**A** and **B**-**B**, the optical diffuser **20** is composed by a substantially spherical portion **22** from which a conical portion **24** extends. The drop shape of the optical diffuser **20** can be alternatively equalized also to other configurations such as for example a mushroom shape or a cone shape or other alike shapes.

Such a geometry allows obtaining a light beam **50,** outgoing from the lens **15,** substantially asymmetric along the transverse direction **T,** in accordance with the direction along which the optical diffuser **20** develops. In particular, in the embodiment represented in figure 2A, the transverse direction **T** corresponds to the direction identified by the median plane cutting the optical diffuser **20** and passing through the vertex of the cone portion **24.** An optimal arrangement of the optical diffuser **20** further provides that the vertex of the cone portion **24** is preferably directed from the side in which the plane **150** to be lighted lies.

In particular, referring to figure 3, the cap **15'** is preferably axially symmetric with respect to a transverse symmetry axis **13** and to a longitudinal symmetry axis **14** orthogonal each other. More in particular, as better shown in figure 2A, the cap **15'** comprises a first **15a** and a second **15b** cap portions coupled together forming a substantially V-shaped groove **17** extending transversally along the transverse symmetry axis **13.** The V-shaped groove is formed by the intersection of two hemispherical portions. Such a configuration of the cap **15** allows obtaining a light beam diverging in a longitudinal direction along the longitudinal symmetry axis **14** (Fig. 7).

The cap **15** is further positioned so that its own center detected by the intersection of the transverse **13** and longitudinal **14** symmetry axes, is coaxial with the axis of the light source **30.**

Figure 5 shows the lighting apparatus **100** wherein a plurality of the afore said light units **10** are provided as arranged on a supporting panel **45.**

In a preferred embodiment, the supporting panel has a preferably elongated shape and the light units **10** are spaced one from each other according to a predetermined pitch p so that to form a respective strip of light units. Additional parallel strips of light units **10** can also be provided according to the intended application.

The supporting panel, in a not shown way, can also be shaped as a single board where differing rows of light units are prearranged.

The supporting element **45** is preferably an electronic panel PCB. The PCB allows controlling the functionalities of the single light units, for example the switching on or off, but also the light intensity and other parameters.

In addition, an optical reflector **70** is provided as prearranged on the supporting panel **45.** The optical reflector **70** contributes to make rectangular the distribution of the luminous flux on the plane **150** to be lighted (Fig. 7) by reducing the light rays outgoing from the area of interest (comparison between Fig. 7A and 7B). In such a case the produced light beam **50** is given by the multiple reflections and refractions the light undergoes with the inner face **20'** and outer face **15'** of the lens **15** and with the reflecting surfaces of the reflector **70.**

In particular, as shown in figure 7B, the light beam **50** is substantially specular and has a larger longitudinal width. The beam is therefore wider, at approximately 130°. In addition, the beam is more intense and concentrated towards the area to be lighted and with reduced light dispersions.

More in detail, the reflector **70** is box shaped and comprises a first **72** and a second **74** main walls which develop parallel to the longitudinal axis **14.** Advantageously, the two walls **72, 74** have a curved profile. In particular, the first wall **72** has a curvature, with radius **R₁** (Fig.1) greater than the curvature, with radius **R₂** of the second wall **74.** The first wall **72** is further tilted of an angle measured with respect to the supporting panel **45.** The angle has a value comprised between 100° and 140° degrees and is preferably of about 130° degrees.

In addition, a glass or polycarbonate cover with antiglare treatment covers the lenses **15** in order to further improve the characteristics of the produced light beam **50.**

Figure 7 shows a spectrum of the light beam which can be obtained with the lighting apparatus **100** including the light units **10,** according to the invention. The light beam **50** has a higher intensity in a center area **55** and a lower intensity in side areas **56** and **57** which develop from sides opposite with respect to the center area **55,** as also visible in figure 7. The longitudinal length **D_{L}** of the light profile **50** is of about **40** meters with an overall width **D_{T}** of about twelve meters, if positioned at a height of about eight meters from ground.

As better shown in figure 6, the center area **55** has a transverse extension able to uniformly encompass the whole carriageway of a street length with a dimension Dc of about eight meters. Conversely, the side areas **56** and **57** allow lighting the side areas of the carriageway, each one with a width **Dm** of about four meters.

Further object of the invention is a lens **15** which can be combined with a light source
**30** of a light unit **10** for the outdoor lighting apparatus **100,** wherein the lens **15** comprises an outer face **15'** facing towards a plane **150** to be lighted and an inner face **20'** facing towards the light source **30.** The outer face **15'** is substantially rounded towards the plane **150** to be lighted. At the inner face **20'** of the lens **15** an optical diffuser **20** is obtained, consisting in a recess having a substantially drop shape.

## Claims

1. Light unit (10) for a lighting apparatus (100), the light unit (10) comprises:
- a light source (30);
- a lens (15) combined with the light source (30), wherein the lens (15) comprises a first outer face (15') facing towards a plane (150) to be lighted and a second inner face (20') facing towards the light source (30), wherein the first face of the lens (15) develops along a main longitudinal direction (L), and wherein the outer face (15') is substantially rounded towards the plane (150) to be lighted,
**characterized in that** at the second inner face (20') of the lens (15) an optical diffuser (20) is obtained consisting in a recess having a substantially drop shape providing at least one substantially hemispherical portion (22) from which a substantially tapered portion (23) extends, whereby the optical diffuser (20) develops substantially along a transverse direction (T) substantially orthogonal or skew with respect to the longitudinal direction (L), or alternatively, the optical diffuser (20) develops substantially along the longitudinal direction (L).

2. Light unit (10) according to claim 1, wherein the second face (20') of the lens (15) is a flat face at which the optical diffuser (20) is obtained.

3. Light unit (10) according to any one of the preceding claims, wherein the first rounded face of the lens (15) defines substantially a cap (15'), said cap (15') being axially symmetric with respect to a transverse symmetry axis (13) of the lens.

4. Light unit (10) according to claim 3, wherein the cap (15') is axially symmetric with respect to the transverse symmetry axis (13) of the lens and to a longitudinal symmetry axis (14) orthogonal to the transverse symmetry axis (13).

5. Light unit (10) according to claims 3 or 4, wherein the cap (15) comprises a first (15a) and a second (15b) cap portion coupled together defining a substantially "V-shaped" groove (17) extending along a transverse symmetry axis (13) of the lens.

6. Light unit (10) according to any one of the preceding claims 3 to 5, wherein the cap (15) is positioned such that its center, located by the intersection of the relevant transverse (13) and longitudinal (14) symmetry axes, is coaxial with the light source (30).

7. Light unit (10) according to any one of the preceding claims, wherein the light source (30) is a high intensity LED source.

8. Lighting apparatus (100) comprising a plurality of light units (10), according to any one of the claims 1-7, prearranged on a supporting panel (45) according to a predetermined layout.

9. Lighting apparatus (100) according to claim 8, wherein the supporting panel (45) has a substantially elongated shape, to form a supporting strip, wherein the plurality of light units (10) is aligned and spaced one from each other according to a certain pitch (p).

10. Lighting apparatus (100) according to claim 9, wherein a reflector (70) is provided mounted on said supporting panel (45) and combined with said plurality of light units (10).

11. Lighting apparatus (100), according to claim 10, wherein the reflector (70) comprises a first (72) and a second (74) wall developing parallel to the longitudinal axis (14), the two walls have a curved shape and in particular the first wall (72) has a curvature radius larger than the curvature radius of the second wall (74).

12. Lens (15) for a light unit (10) for an outdoor lighting apparatus (100) comprising a light source (30), the lens further comprising a first face (15') facing towards a plane to be lighted (150) and a second face (20') facing towards the light source (30), wherein the first face (15') is substantially rounded towards the plane to be lighted (150), wherein the first face of the lens (15) develops along a main longitudinal direction (L), and wherein at the second face (20') of the lens (15) an optical diffuser (20) is obtained consisting in a recess having a substantially drop shape providing at least one substantially hemispherical portion (22) from which a substantially tapered portion (23) extends, whereby the optical diffuser (20) develops substantially along a transverse direction (T) substantially orthogonal or skew with respect to the longitudinal direction (L), or alternatively, the optical diffuser (20) develops substantially along the longitudinal direction (L).

## Patentansprüche

1. Leuchteinheit (10) für eine Beleuchtungsvorrichtung (100), wobei die Leuchteinheit (10) umfasst:
eine Lichtquelle (30);
eine der Lichtquelle (30) zugeordnete Linse (15), wobei die Linse (15) eine erste, einer Ebene (150) zugewandte Außenfläche (15') und eine der Lichtquelle (30) zugewandten zweite Innenfläche (20') aufweist, wobei die erste Fläche der Linse (15) sich entlang einer Hauptlängsrichtung (L) erstreckt, und wobei die Außenfläche (15') zu der zu beleuchtenden Ebene (150) hin im Wesentlichen abgerundet ist,
**dadurch gekennzeichnet, dass**
an der zweiten Innenfläche (20') der Linse (15) ein optischer Diffusor (20) gebildet wird, der aus einer Vertiefung mit im Wesentlichen Tropfenform besteht, die mindestens einen im Wesentlichen halbkugelförmigen Abschnitt (22) bereitstellt, von dem sich ein im Wesentlichen verjüngter Abschnitt (23) erstreckt, wobei der optische Diffusor (20) im Wesentlichen entlang einer Querrichtung (T) im Wesentlichen orthogonal oder windschief zur Längsrichtung (L) ausgebildet ist, oder alternativ der optische Diffusor (20) im Wesentlichen entlang der Längsrichtung (L) ausgebildet ist.

2. Leuchteinheit (10) nach Anspruch 1, wobei die zweite Fläche (20') der Linse (15) eine ebene Fläche ist, an der optische Diffusor (20) erhalten wird.

3. Leuchteinheit (10) nach einem der vorhergehenden Ansprüche, wobei die erste abgerundete Fläche der Linse (15) im Wesentlichen eine Kappe (15') definiert, wobei die Kappe (15') bezüglich einer Quersymmetrieachse (13) der Linse axialsymmetrisch ist.

4. Leuchteinheit (10) nach Anspruch 3, wobei die Kappe (15') bezüglich der Quersymmetrieachse (13) der Linse und einer zur Quersymmetrieachse (13) orthogonalen Längssymmetrieachse (14) axialsymmetrisch ist.

5. Leuchteinheit (10) nach Anspruch 3 oder 4, wobei die Kappe (15) einen ersten (15a) und einen zweiten (15b) Kappenabschnitt umfasst, die miteinander gekoppelt sind und eine im Wesentlichen "V-förmige" Nut (17) definieren, die sich entlang einer Quersymmetrieachse (13) der Linse erstreckt.

6. Leuchteinheit (10) nach einem der vorhergehenden Ansprüche 3 bis 5, wobei die Kappe (15) so positioniert ist, dass ihr Mittelpunkt, der durch den Schnittpunkt der entsprechenden Quer- (13) und Längssymmetrieachsen(14) ermittelt wird, koaxial zur Lichtquelle (30) angeordnet ist.

7. Leuchteinheit (10) nach einem der vorhergehenden Ansprüche, wobei die Lichtquelle (30) eine Hochintensitäts-LED-Quelle ist.

8. Beleuchtungsvorrichtung (100) mit mehreren Leuchteinheiten (10) nach einem der Ansprüche 1-7, die gemäß einem vorgegebenen Layout auf einer Trägerplatte (45) vorangeordnet ist.

9. Beleuchtungsvorrichtung (100) nach Anspruch 8, wobei die Trägerplatte (45) eine im Wesentlichen längliche Form aufweist, um einen Trägerstreifen zu bilden, wobei die Mehrzahl von Leuchteinheiten (10) gemäß einer bestimmten Teilung (p) zueinander ausgerichtet und beabstandet sind.

10. Beleuchtungsvorrichtung (100) nach Anspruch 9, wobei ein Reflektor (70) vorgesehen ist, der an der Trägerplatte (45) angebracht und der Mehrzahl von Leuchteinheiten (10) zugeordnet ist.

11. Beleuchtungsvorrichtung (100) nach Anspruch 10, wobei der Reflektor (70) eine erste (72) und eine zweite (74) parallel zur Längsachse (14) verlaufende Wand umfasst, wobei die beiden Wände eine gekrümmte Form aufweisen und insbesondere die erste Wand (72) einen Krümmungsradius aufweist, der größer ist als der Krümmungsradius der zweiten Wand (74).

12. Linse (15) für eine Leuchteinheit (10) für eine Aussenbeleuchtungsvorrichtung (100) umfassend eine Leuchtquelle (30),
die Linse ferner eine erste Fläche (15') aufweist, die einer zu beleuchtenden Ebene (150) zugewandt ist, und eine der Lichtquelle (30) zugewandte zweite Fläche (20') aufweist, wobei die erste Fläche (15') zur zu beleuchtenden Ebene (150) hin im Wesentlichen abgerundet ist,
wobei die erste Fläche der Linse (15) sich entlang einer Hauptlängsrichtung (L) erstreckt,
und wobei an der zweiten Innenfläche (20') der Linse (15) ein optischer Diffusor (20) gebildet wird, der aus einer Vertiefung mit im Wesentlichen Tropfenform besteht, die mindestens einen im Wesentlichen halbkugelförmigen Abschnitt (22) bereitstellt, von dem sich ein im Wesentlichen verjüngter Abschnitt (23) erstreckt,
wobei der optische Diffusor (20) im Wesentlichen entlang einer Querrichtung (T) im Wesentlichen orthogonal oder windschief zur Längsrichtung (L) ausgebildet ist, oder alternativ der optische Diffusor (20) im Wesentlichen entlang der Längsrichtung (L) ausgebildet ist.

## Revendications

1. Unité lumineuse (10) pour un appareil d'éclairage (100), l'unité lumineuse (10) comprend:
- une source lumineuse (30);
- une lentille (15) associée à la source lumineuse (30), dans laquelle la lentille (15) comprend une première face externe (15') orientée vers un plan (150) à éclairer et une seconde face interne (20') orientée vers la source lumineuse (30), où la première face de la lentille (15) se développe le long d'une direction longitudinale principale (L), et où la face externe (15') est substantiellement arrondie vers le plan (150) à éclairer, **caractérisée en ce que**, au niveau de la seconde face interne (20') de la lentille (15), on obtient un diffuseur optique (20) consistant en un évidement ayant substantiellement une forme de goutte fournissant au moins une partie substantiellement hémisphérique (22) à partir de laquelle s'étend une partie substantiellement effilée (23), de sorte que le diffuseur optique (20) se développe substantiellement selon une direction transversale (T) substantiellement orthogonale ou oblique par rapport à la direction longitudinale (L), ou comme alternative, le diffuseur optique (20) se développe substantiellement le long de la direction longitudinale (L).

2. Unité lumineuse (10) selon la revendication 1, dans laquelle la seconde face (20') de la lentille (15) est une face plane au niveau de laquelle est obtenu le diffuseur optique (20).

3. Unité lumineuse (10) selon l'une quelconque des revendications précédentes, dans laquelle la première face arrondie de la lentille (15) définit substantiellement un capuchon (15 '), ledit capuchon (15') étant axialement symétrique par rapport à un axe de symétrie transversale (13) de la lentille.

4. Unité lumineuse (10) selon la revendication 3, dans laquelle le capuchon (15') est axialement symétrique par rapport à l'axe de symétrie transversale (13) de la lentille et à un axe de symétrie longitudinale (14) orthogonal à l'axe de symétrie transversale (13).

5. Unité lumineuse (10) selon la revendication 3 ou 4, dans laquelle le capuchon (15) comprend une première (15a) et une seconde partie (15b) de capuchon couplées ensemble définissant une rainure (17) substantiellement "en forme de V" s'étendant le long d'un axe de symétrie transversale (13) de la lentille.

6. Unité lumineuse (10) selon l'une quelconque des revendications précédentes 3 à 5, dans laquelle le capuchon (15) est positionné de sorte que son centre, localisé à l'intersection des axes de symétrie transversale (13) et longitudinale (14) pertinents, soit coaxial à la source lumineuse (30).

7. Unité lumineuse (10) selon l'une quelconque des revendications précédentes, dans laquelle la source lumineuse (30) est une source LED à haute intensité.

8. Appareil d'éclairage (100) comprenant une pluralité d'unités lumineuses (10), selon l'une quelconque des revendications 1-7, pré-arrangées sur un panneau de support (45) selon une disposition prédéterminée.

9. Appareil d'éclairage (100) selon la revendication 8, dans lequel le panneau de support (45) a une forme substantiellement allongée, pour former une bande de support où est alignée la pluralité d'unités lumineuses (10) lesquelles sont espacées l'une de l'autre selon un certain pas (p).

10. Appareil d'éclairage (100) selon la revendication 9, dans lequel est prévu un réflecteur (70) monté sur ledit panneau de support (45) et associé à ladite pluralité d'unités lumineuses (10).

11. Appareil d'éclairage (100) selon la revendication 10, dans lequel le réflecteur (70) comprend une première (72) et une seconde paroi (74) se développant parallèlement à l'axe longitudinal (14), les deux parois ont une forme courbe et en particulier la première paroi (72) a un rayon de courbure plus grand que le rayon de courbure de la seconde paroi (74).

12. Lentille (15), pour une unité lumineuse (10) pour un appareil d'éclairage extérieur (100), comprenant une source lumineuse (30), la lentille comprenant en outre une première face (15') orientée vers un plan à éclairer (150) et une seconde face (20') orientée vers la source lumineuse (30), où la première face (15') est substantiellement arrondie vers le plan à éclairer (150), où la première face de la lentille (15) se développe le long une direction longitudinale principale (L), et où au niveau de seconde face (20') de la lentille (15), on obtient un diffuseur optique (20) consistant en un évidement ayant une forme substantiellement de goutte fournissant au moins une partie substantiellement hémisphérique (22) à partir de laquelle s'étend une partie substantiellement effilée (23), de sorte que le diffuseur optique (20) se développe substantiellement le long d'une direction transversale (T) substantiellement orthogonale ou oblique par rapport à la direction longitudinale (L) ou, comme alternative, le diffuseur optique (20) se développe substantiellement le long de la direction longitudinale (L).
